# EUROPÄISCHE PATENTANMELDUNG

(11) **EP 1 143 318 A2**
(43) Veröffentlichungstag der Anmeldung: **10.10.2001**
(21) Anmeldenummer: 01106877.2
(22) Anmeldetag: 20.03.2001
(51) Int. Cl.: G05D 16/06

(54) **Membranventil**

(30) Priorität: 01.04.2000 DE 20006105 U
(71) Anmelder: APV ROSISTA GMBH, 59425 Unna (DE)
(72) Erfinder: Bräckelmann, Wolfgang, 59425 Unna-Uelzen (DE); Schulz, Dieter, 44894 Bochum (DE)

(57) **Zusammenfassung**

Die Vorrichtung bezieht sich auf ein Membranventil und dergleichen wie Druckhalteventil mit einer zweiteiligen Regelmembrane (2,3), die in einem Ventilgehäuse (1) dichtend eingelagert ist und den Steuerraum (4) von dem Produktraum (5) trennt und mit einem Ventilkörper (6,7), der im Zentrum des Ventilgehäuses mit der Regelmembrane abdichtend verbunden ist. Hierbei ist erfindungsgemäß vorgesehen, daß mindestens eine der zueinander weisenden Membranflächen (13,14) eine kanalbildende Oberfläche aufweist, deren Kanäle (15,16,17) zum Zentrum des Ventilgehäuses und von diesem nach außen zu einem Ableitrohr (21) geführt sind.

## Beschreibung

Die Neuerung bezieht sich auf ein Membranventil und dergleichen, wie Druckhalteventil mit einer zweiteiligen Regelmembrane gemäß Oberbegriff des Anspruchs 1.

Derartige Membranventile zählen zu den pneumatisch gesteuerten Druckregelventilen bzw. Druckhalteventilen zur Konstanthaltung von Prozessdrücken in verfahrenstechnischen Anlagen, beispielsweise der Lebensmittel- und/oder Getränkeindustrie sowie der pharmazeutischen und chemischen Industrie. Das Wirkungsprinzip der Druckkonstanthaltung beruht auf dem Verkleinern oder Vergrößern des freien Strömungsquerschnittes am Ventilsitz durch den verstellbaren Ventilschaft, der mit der Regelmembrane verbunden ist.

Bei diesen Steuerventilen bestehen die Probleme im wesentlichen im Bereich der Regelmembrane, die aufgrund der Bauart in den meisten Fällen unmittelbar mit dem Prozess in Kontakt steht. Insbesondere sind besondere konstruktive Vorkehrungen erforderlich, die ein Ausströmen des Prozeß- und/oder Steuerfluids im gefährdeten Bereich der Regelmembrane verhindern.

Aus der US-PS 3182678 geht eine Steuerventil der eingangs genannten Art hervor, bei dem die aus zwei Membranteilen bestehende Membranwand eine zwischen den Membranteilen angeordnete Stützeinrichtung aufweist. Diese Stützeinrichtung weist die Form einer Scheibe auf, die sich, ausgehend vom zentralen Teil der Membrane, über eine vorgegebene Strecke in radialer Richtung nach außen erstreckt.

Ferner zeigt die DE-PS 2818633 ein Steuerventil mit einer Membranwand, die dichtend in einem Ventilgehäuse eingeklemmt ist und zwei Kammern voneinander trennt, die mit unterschiedlichen Drücken beaufschlagbar sind, und mit einem Ventilkörper, der an einem zentralen Bereich der Membranwand befestigt und unter Einwirkung auf einen Ventilsitz in axialer Richtung durch die Membranwand bewegbar ist, wobei die Membranwand zwei separate Membranteile aufweist, von denen jeweils eines auf einer Seite der Membranwand angeordnet und einer entsprechenden Kammer zugewandt ist, wobei zwischen dem Membranteil eine Stützvorrichtung vorgesehen ist.

Hierbei ist in dem äußeren Befestigungsbereich der Membranwand ein halbkreisförmig umlaufender Ringraum vorgesehen, dem eine nach außen geführte Bohrung zugeordnet ist, die zum Ableiten austretender Leckage-Flüssigkeiten nach außen dient. Mit dieser Ausbildung ist nur eine mangelhafte unkontrollierte Ableitung der Leckage-Flüssigkeit gegeben. Insbesondere kann diese nicht gezielt abgeleitet werden, was insbesondere bei den häufig hohe Temperaturen aufweisenden Prozess-Flüssigkeiten eine erhebliche Gefahr für das Bedienungspersonal darstellt. Ferner entsteht durch den unkontrollierten Ausfluß eine unnötige Verunreinigung des angrenzenden Anlagenbereichs.

Aufgabe der Neuerung ist es, ein Druckhalteventil der eingangs genannten Art dahingehend zu verbessern, daß eine kontrollierte Ableitung von Leckage-Flüssigkeit gewährleistet, wobei auch der zum Zentrum weisende Teil der Regelmembrane durch besondere Vorkehrungen miteingeschlossen sein soll.

Diese Aufgabe wird bei einem Membranventil der bekannten Art dadurch gelöst, daß mindestens eine der zueinander weisenden Membranflächen eine kanalbildende Oberfläche aufweist, deren Kanäle zum Zentrum des Ventilgehäuses und von diesem nach außen zu einem Ableitrohr geführt sind.

In selbständiger Ausbildung der Neuerung wird ferner vorgeschlagen, daß mindestens eine der zueinander weisenden Membranflächen wellenförmige und/oder abstandsbildende Erhebungen aufweist, zwischen denen von der äußeren Einspannstellung bis hin zu einem inneren Ableitringraum Kanäle gebildet sind und im inneren Ringraum mindestens ein gezielter Ableitkanal nach außen vorgesehen ist.

Ferner wird in eigenständiger Ausbildung vorgeschlagen, daß die gegeneinander weisenden Membranflächen mindestens einen von der äußeren Einspannstelle ausgehenden Leckage-Sammelraum aufweisen, von dem mindestens ein nach innen weisender Ableitkanal zum Ventilschaft und von und entlang diesem nach oben aus dem Ventilgehäuse hinaus in einen mit einem Ableitrohr verbundenen Überleitraum geführt ist.

Weitere ergänzende und erweiternde Merkmale der Neuerung ergehen aus den Unteransprüchen.

Mit der neuerungsgemäß vorgeschlagenen Ausbildung einer solchen Leckage-Führung ist eine gezielte und sichere Ableitung nach außen gewährleistet. Insbesondere wird eine unkontrcllierte, störende und auch gefährliche Abspritzung von Leckage-Medien ausgeschlossen. Dabei ist durch die wellenförmige Ausbildung der Membrane eine vorteilhafte Abführung auch nur geringer Leckage-Mengen gegeben. Insbesondere sind die wellenförmigen Erhebungen und/oder abstandsbildenden Oberflächenerhebungen so ausgeführt, daß praktisch im gesamten Membraninnenraum eine Ableitung der Leckage-Flüssigkeit zum Zentrum hin gewährleistet ist. Dieses kann insbesondere durch eine punktförmige Anlage der gegeneinander weisenden Membranflächen erzielt werden, so daß praktisch zwischen den Anlagenpunkten eine Vielzahl freier Kanäle zum Zentrum und damit zum Ableitraum führt.

Im nachfolgenden wird die Neuerung anhand eines in der Zeichnung dargestellten Ausführungsbeispiels näher erläutert.

### In der Zeichnung zeigt:

- Figur 1: einen Querschnitt durch das als Druckhalteventil ausgebildete Membranventil und
- Figur 2: eine vergrößtere Darstellung eines Ausschnitts der zueinander weisenden Membranflächen.

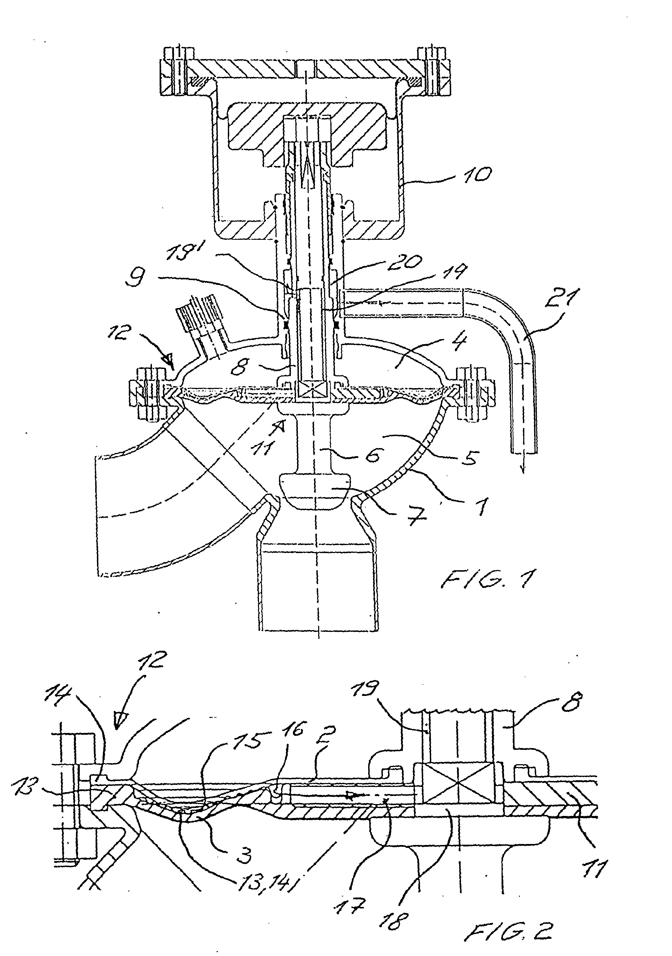

Gemäß dem in Figur 1 dargestellten Ausführungsbeispiel besteht das als Druckhalteventil ausgebildete Membranventil aus einem Ventilgehäuse 1, dessen Innenraum eine abdichtend eingespannte Doppelmembrane mit einer oberen Membrane 2 und einer unteren Membrane 3 aufweist. Diese Membranen 2,3 teilen das Ventilgehäuse 1 in einen oberen Steuerraum 4 und einen unteren Produktraum 5. In dem Produktraum 5 befindet sich ein unterer Ventilschaft 6 mit einem Steuerventil 7. Der obere Steuerraum 4 nimmt den oberen Ventilschaft 8 auf, der durch das Ventilgehäuse 1 durch eine Führung 9 zu einem zusätzlich verwendeten Booster 10 führt. Die Ventilschäfte 6,8 weisen eine zentrale Einspannstelle 11 für die Membranen 2,3 auf, die ihrerseits auf einer Spannplatte 11 aufgelegt sind. Der äußere Rand dieser Membranen 2,3 ist in einer äußeren Einspannstelle 12 dichtend gehalten.

Mindestens eine der zueinander weisenden Membranfläche 13, 14 weist, wie in Figur 2 vergrößert dargestellt, eine kanalbildende Oberfläche auf, so daß von dem äußeren Innenrand des Ventilgehäuse 1 in Richtung zum Zentrum des Ventilgehäuses Kanäle 15 gebildet sind, die mindestens bis zu einem Ringkanal 16 führen, der wiederum mit weiteren in der Spannplatte 11 befindlichen Kanäle 17 zu einem inneren Ableitraum 18 der Ventilschäfte führt. Von diesem Ableitraum 18 ist ein nach oben entlang des oberen Ventilschaftes 8 führender Kanal 19 vorgesehen, der mit einer Öffnung 19' in einem oberen Überleitraum 20 endet. Dieser ist mit einem gezielt nach außen und unten weggeführten Ableitrohr 21 verbunden.

Der zwischen den Membranen 2,3 sich bildende Leckage-Sammelraum kann von einer wellenförmig ausgebildeten Membranoberfläche gebildet sein. Auch können auf mindestens einer der zueinander weisenden Membranflächen 13,14 Versteifungen und/oder Erhebungen vorgesehen sein, die ebenfalls zweckmäßig zu dem Ringkanal 16 führen. Weitere Varianten der Oberflächen solcher zueinander weisender Membranflächen 13,14 sind im Rahmen der Merkmale der betreffenden Unteransprüche denkbar. Im Falle einer sich bildenden Leckage kann die Leckage-Flüssigkeit durch die vorbeschriebenen Kanäle und Übergangsräume gezielt durch das Ableitrohr 21 abgeführt werden.

## Patentansprüche

1. Membranventil und dergleichen wie Druckhalteventil mit einer zweiteiligen Regelmembrane, die in einem Ventilgehäuse dichtend eingelagert ist und den Steuerraum von dem Produktraum trennt und mit einem Ventilkörper, der im Zentrum des Ventilgehäuses mit der Regelmembrane abdichtend verbunden ist, ***dadurch gekennzeichnet, daß*** mindestens eine der zueinander weisenden Membranflächen (13,14) eine kanalbildende Oberfläche aufweist, deren Kanäle (15) zum Zentrum des Ventilgehäuses (1) und von diesem nach außen zu einem Ableitrohr (21) geführt sind.

2. Membranventil gemäß Oberbegriff des Anspruchs 1, ***dadurch gekennzeichnet, daß*** mindestens eine der zueinander weisenden Membranflächen (13,14) wellenförmige und/oder abstandsbildende Erhebungen aufweist, zwischen denen von der äußeren Einspannstelle (12) bis hin zu einem inneren Ableitringraum (18) Kanäle (15) gebildet sind und im inneren Ringraum (18,19) mindestens ein gezielter Ableitkanal (20,21) nach außen vorgesehen ist.

3. Membranventil gemäß Oberbegriff des Anspruchs 1, ***dadurch gekennzeichnet, daß*** die gegeneinanderweisenden Membranflächen (13,14) mindestens einen von der äußeren Einspannstelle ausgehenden Leckage-Sammelraum aufweisen, von dem mindestens ein nach innen weisender Ableitkanal (16,17) zum Ventilschaft (8) von und entlang diesem nach oben aus dem Ventilgehäuse hinaus in einen mit einem Ableitrohr (21) verbundenen Überleitraum (20) geführt ist.

4. Membranventil nach den vorhergehenden Ansprüchen, ***dadurch gekennzeichnet, daß*** der Leckage-Sammelraum von einer im Querschnitt wellenförmig ausgeformten Membranoberfläche (13,14) gebildet ist.

5. Membranventil nach den vorhergehenden Ansprüchen, ***dadurch gekennzeichnet, daß*** mindestens eine der zueinanderweisenden Membranflächen (13,14) eine innenliegende Versteifung und/oder Erhebungen aufweisen und an/oder in dieser Versteifung und/oder Erhebung mindestens ein zum Ventilschaft (8) verlaufender Ableitkanal (15,16,17) angeordnet ist.

6. Membranventil nach den vorhergehenden Ansprüchen, ***dadurch gekennzeichnet, daß*** der Ableitkanal (17) in einem inneren Ringraum (18) mündet, in dem ein weiterer hochgerichteter Kanal (19) längs der beweglichen Ventilschaftstange in einen oberen Überleitraum (20) führt.

7. Membranventil nach den vorhergehenden Ansprüchen, ***dadurch gekennzeichnet, daß*** der hochgerichtete Kanal (19) als Ringkanal zwischen dem Außenmantel der Ventilschaftstange und dem Innenmantel des Schaftoberteils (8) gebildet ist.

8. Membranventil nach den vorhergehenden Ansprüchen, ***dadurch gekennzeichnet, daß*** das Ableitrohr (21) mit dem oberen Überleitraum (20) verbunden und von diesem nach unten gerichtet ist.

9. Membranventil nach den vorhergehenden Ansprüchen, ***dadurch gekennzeichnet, daß*** eine untere und eine obere Membrane (13,14) vorgesehen ist und zwischen diesen beiden Membranen (13,14) eine Versteifung (11) mit mindestens einem Ableitkanal (17) eingebunden ist.

10. Membranventil nach den vorhergehenden Ansprüchen, ***dadurch gekennzeichnet, daß*** die Oberfläche mindestens einer Membraninnenseite (13,14) mit Ableitkanälen in Form von Rillen ausgebildet ist.

11. Membranventil nach den vorhergehenden Ansprüchen, ***dadurch gekennzeichnet, daß*** die Rillen spiralförmig nach innen zu einem Ableitkanal (16,17) verlaufen.

12. Membranventil nach den vorhergehenden Ansprüchen, ***dadurch gekennzeichnet, daß*** die Rillen gleichzeitig mit ihren angrenzenden Erhebungen als Versteifung der so ausgebildeten Membranseite dienen.
